(19) **Europäisches Patentamt / European Patent Office / Office européen des brevets**

(11) **EP 4 768 716 A1**

(12) **EUROPEAN PATENT APPLICATION**

(43) Date of publication:
**01.07.2026 Bulletin 2026/27**

(21) Application number: **24307342.6**

(22) Date of filing: **31.12.2024**

(51) International Patent Classification (IPC):
**F03D 7/02** *(2006.01)* **F03D 7/04** *(2006.01)*

(52) Cooperative Patent Classification (CPC):
**F03D 7/049; F03D 7/0204; F03D 7/0224; F03D 7/045;** F03D 7/0292; F05B 2260/821; F05B 2270/1033; F05B 2270/20; F05B 2270/32; F05B 2270/321; F05B 2270/329; F05B 2270/332; F05B 2270/335; F05B 2270/404

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TotalEnergies OneTech**
**92400 Courbevoie (FR)**

(72) Inventors:
• BENSLIMANE, Hamza
92220 BAGNEUX (FR)
• ALLYBOKUS, Zaid
92400 COURBEVOIE (FR)

(74) Representative: **Lavoix**
**2, place d'Estienne d'Orves**
**75441 Paris Cedex 09 (FR)**

(54) **A CONTROL METHOD FOR CONTROLLING A WIND FARM, RELATED COMPUTER PROGRAM PRODUCT AND ELECTRONIC CONTROL DEVICE**

(57) A control method (100) for controlling a wind farm comprising a plurality of wind turbines, based on a plurality of estimated wind velocities and a plurality of estimated wind directions of the wind on the wind farm.

The method comprises determining (120), for each wind turbine, a respective rotation command by solving an optimization problem.

The optimization problem aims at maximizing an objective function, comprising a first component and a second component.

The first component is representative of power generated by the wind farm for said set of successive time instants.

The second component is representative of the fatigue of each wind turbine of the wind farm, surrogated over the set of successive time instants.

Said second component depends on the fatigue induced by mechanical moments of wind forces on each wind turbine, at each time instant.

FIG.4

**Description**

The present invention concerns a control method for controlling a wind farm.

The present invention in addition concerns a computer program product and an electronic control device configured to implement such a method.

The present invention concerns the domain of piloting the orientation of wind turbines within a wind farm to improve its productivity.

The productivity of a wind turbine, i.e. the generated power, depends mainly on the velocity of the wind and its direction with respect to the wind turbine.

In particular, a wind turbine only produces energy if the wind reaching the wind turbine has a direction and velocity within a specific respective range. In particular, it is known that the optimal wind production is reached when the wind turbine is facing the wind direction and when the wind velocity is neither too high, nor too small.

Thus, to improve the production of the wind turbine, it is known to control its yaw angle, i.e. its rotation along an elongation axis of the wind turbine, via a yaw actuator, to try to reach an optimal velocity and direction of the wind on blades of the wind turbine.

When considering a farm of wind turbines, it is known to measure the wind velocity and direction at a point close to the wind farm. From this measurement, it is known apply a control technique, at each time instant, consisting in commanding the yaw angle of each turbine to have each wind turbine tracking said measured wind direction.

However, this technique faces mains issues that make it strongly suboptimal.

Firstly, wind turbines are massive elements, so that the variation of their yaw angle cannot be greater than a certain threshold, e.g. few degrees by minute. Thus, if the wind direction is changing rapidly, it is not possible for the wind turbine to track such changes properly. In other words, in this case, the yaw actuators are always late compared the wind changes. Thus, at each time, the wind turbines do not have the appropriate yaw angle, with respect to the wind direction.

Secondly, when the wind reaches a wind turbine it creates forces on said wind turbines. Such forces are mainly due to an angle between the wind direction and an orientation of the wind turbine. These forces induce mechanical moments on the different mechanical parts of the wind turbine, thus inducing a fatigue of the mechanical parts. To avoid any breakdown of these mechanical parts, maintenance are often proceeded to check, fix and/or replace some of these mechanical parts.

During these maintenances, the wind turbine must be shut down, lowering drastically the production of the wind farm.

Due to the two previously presented issues, said control technique, consisting in trying to track the direction of the wind on the wind farm, leads to a suboptimal energy production of the wind farm.

It thus exists a need for a better control method improving the energy production of the wind farm in long term.

To this end, the invention concerns a control method for controlling a wind farm comprising a plurality of wind turbines, based on a plurality of estimated wind velocities and a plurality of estimated wind directions of the wind on the wind farm,

each wind turbine being configured, upon receiving a rotation command, to rotate, around an elongation axis respective of the wind turbine, according to said rotation command,
the method being implemented by an electronic control device and comprising the following steps at an initial time instant:

- receiving, for a set of L successive time instants, estimated wind directions of wind and estimated wind velocities, on the wind farm, each estimated wind direction being associated to a respective time instant;
- for said initial time instant, determining, for each wind turbine, a respective rotation command from the set of estimated wind directions and the set of velocities of the wind on the wind farm, by solving an optimization problem over an horizon L,

the optimization problem aiming at maximizing an objective function, comprising a first component and a second component,
the first component being representative of power generated by the wind farm for said set of successive time instants,
the second component being representative of the fatigue of each wind turbine of the wind farm, surrogated over the set of successive time instants,
said second component depending on the fatigue induced by mechanical moments of wind forces on each wind turbine, at each time instant of the set of successive time instants, such fatigue being preferably a fatigue component due to a misalignment between an orientation of the wind turbine and the estimated wind directions,

- sending the determined rotation command to each respective wind turbine for the rotation of each wind turbine.

Since the control method according to the invention comprises, for determining the rotation command at an initial time instant, optimizing a quantity depending on the power generated by the farm over a specific horizon, the first issue is overcome.

In addition, since the control method according to the invention comprises, for determining the rotation command at an initial time instant, optimizing a quantity depending on the fatigue induced by wind over the wind turbines, the second issue is overcome.

According to specific embodiments of the invention, the control method comprises one or more of the following features, taken solely, or according to any feasible combination:

- during the receiving step a grid constraint is received for each time instant of the set of successive time instants,

  for each time instant, the grid constraint being a maximal power that a grid connected to the wind farm is configured to handle,
  the method in addition comprising, a step of setting up a blade pitch angle of each wind turbine for each time instant of the set of successive time instants from the grid constraints,
  during the sending step, the blade pitch angle at the next time instant, being in addition sent to the respective wind turbine ;

- during the step of setting up, the blade pitch angle of each wind turbine is determined by the following sub steps:

  ∘ initializing, for each time instant of the set of successive time instants and for each wind turbine, the respective blade pitch angle at a predetermined initial value,
  ∘ determining, based on a simulator, the power generated by the wind farm for said set of successive time instants, based on the estimated wind directions, on the estimated wind velocities, with blade pitch angles at the predetermined initial value,
  ∘ determining, for each time instant of the set of successive time instants, a respective penalty coefficient corresponding to a ratio between the determined power and the corresponding grid constraint of the respective time instant,
  ∘ setting up the value of each blade pitch angle based on the corresponding penalty coefficient, so that; for each instant, the power generated by the wind farm at the corresponding time instant and considering the set up value of each blade pitch angle, is equal to the grid constraint;

- the method comprises the step of setting up each blade pitch angle between the receiving step and the determining step,

  during the sub step of determining the power generated by the wind farm, said power is determined considering that each wind turbine is facing the corresponding estimated wind direction at each instant of the set of successive time instants,
  during the determining step, the objective function depending the set-up blade pitch angles;

- the method comprises the step of setting up each blade pitch angle between the determining step and the sending step,
  during the sub step of determined the power generated by the wind farm, said power is determined considering that each wind turbine follows the respective determined rotation command;

- during the receiving step, a set of power weightings is received, the set of power weightings comprising a weighting for each time instant of the set of successive time instants,
  during the determining step, the first component comprising for each time instant of the set of successive time instants, the power generated by the farm weighted by the received power weighting of the corresponding time instant;

- during the receiving step, a deactivation constraint is received for each time instant of the set of successive time instants,

  for each time instant and for each wind turbine, the deactivation constraint indicating if each the wind turbine produces power or not,
  during the determining step, the first and the second components depending on the deactivation constraints;

- the first component comprises, for each time instant of the set of successive time instants, the power generated by the wind farm evaluated by a power simulator, and
  wherein the second component comprises, for each time instant of the set of successive time instants, the fatigue of the wind turbines of the wind farm evaluated by a fatigue simulator;
- the determining step comprises:

  ∘ initializing at predetermined values, an angle between an orientation of each wind turbine and the estimated wind direction, for each time instant of the set of successive time instants, said set of angles being further denoted operating point,

  the determining step further comprising the following sub steps that are iterated several times until a predefined termination criterion is met:

  ∘ estimating a gradient of the first component at the operating point, as a function of said angles, by performing several estimations of the first component with the power simulator, preferably according to a finite difference algorithm,
  ∘ estimating a gradient of the second component at the operating point, a function of said angle, by performing several estimations of the second component with the fatigue simulator, preferably according to a finite difference algorithm,
  ∘ updating the operating point based on the estimated gradients,

  the determining step further comprising :

  ∘ determining the rotation command of each wind turbine from the last updated operating point;

- during the receiving step, a maximum misalignment constraint is received, during the determining step the optimization problem being solved over a feasible space wherein, at each time instant of the set of successive time instants, and for each wind turbine, an angle between the wind turbine orientation and the estimated wind direction is bounded by the maximum misalignment constraint;
- during determining step, the objective function comprises a third component representative of the rotation of each wind turbine between two successive time instants of the set of successive time instants, said third component penalizing the objective function as a function of a variation of the wind turbine orientation between two successive time instants; and
- the objective function comprises a discount factor making decrease the influence of the first and the second through the time instants of the set of successive time instants.

The present invention also concerns a computer program product comprising software instructions which, when being executed by a computer, implement such a method.
The present invention also concerns an electronic control device for controlling a wind farm comprising a plurality of wind turbines, based on a plurality of estimated wind velocities and a plurality of estimated wind directions of the wind on the wind farm,

each wind turbine being configured, upon receiving a rotation command, to rotate, around an elongation axis respective of the wind turbine, according to said rotation command,
the electronic control device comprising:

- a receiving module configured to receive, for a set of L successive time instants, estimated wind directions of wind and estimated wind velocities, on the wind farm, each estimated wind direction being associated to a respective time instant;
- a determining module configured to determine, for said initial time instant and for each wind turbine, a respective rotation command from the set of estimated wind directions and the set of velocities of the wind on the wind farm, by solving an optimization problem over an horizon L,

the optimization problem aiming at maximizing an objective function, comprising a first component and a second component,
the first component being representative of power generated by the wind farm for said set of successive time instants,
the second component being representative of the fatigue of each wind turbine of the wind farm, surrogated over the set of successive time instants,
said second component depending on the fatigue induced by a moment of wind forces on each wind turbine, at each time instant of the set of successive time instants, such fatigue being preferably a fatigue component due to a misalignment between an orientation of the wind turbine and the estimated wind directions,

- a sending module configured to send the determined rotation command, to each respective wind turbine for the rotation of each wind turbine.

The invention will be better understood upon reading the following description, only given as an example of embodiments of the invention, and in reference to the attached Figures, among which:

- Figure 1 is schematic view of wind farm comprising an electronic control device, according to the invention, for a controlling the wind farm;

- Figure 2 is a front view of a wind turbine belonging to the wind farm of Figure 1;

- Figure 3 is schematic top view of a wind turbine belonging to the wind farm of Figure 1;

- Figure 4 is the beginning of a flowchart of a control method implemented by the electronic control device represented in Figure 1; and

- Figure 5 is the end of the flowchart of Figure 4.

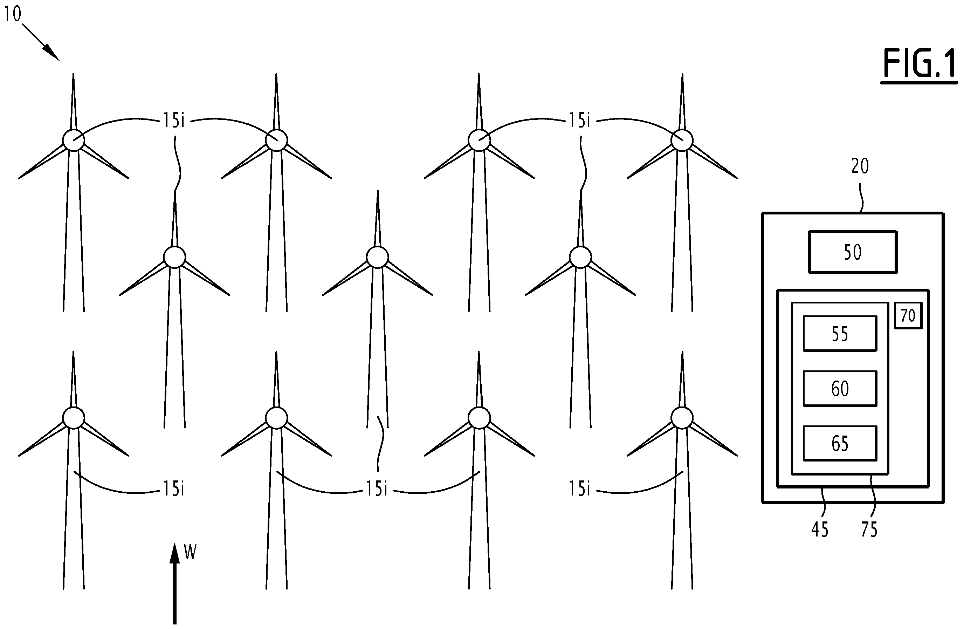

In Figure 1 is represented a wind farm 10. The wind farm 10 is for example on offshore wind farm. Alternatively, the wind farm 10 is an onshore wind farm.

The wind farm 10 comprises several wind turbines 15i, for example a number N of wind turbines 15i, with "i" evolving from 0 to N-1, and a control system 20. The number N is at least two, for example greater than ten, twenty, fifty or even a hundred.

As represented in figure 1, the wind turbines 15i of the wind farm 10 are for example bottom-fixed wind turbines, i.e. wind turbines comprising a monopile solidly fixed to the ground, or to the seabed in case of offshore wind turbine.

According to a non-shown variant, and only in the case of an offshore wind farm, the wind turbines are floating wind turbines, i.e. each wind turbine comprises a foundation floating on a water body and bearing the rest of the wind turbine.

Alternatively, and only in case of an offshore wind farm, the wind farm is mixed, comprising both bottom-fixed and floating wind turbines.

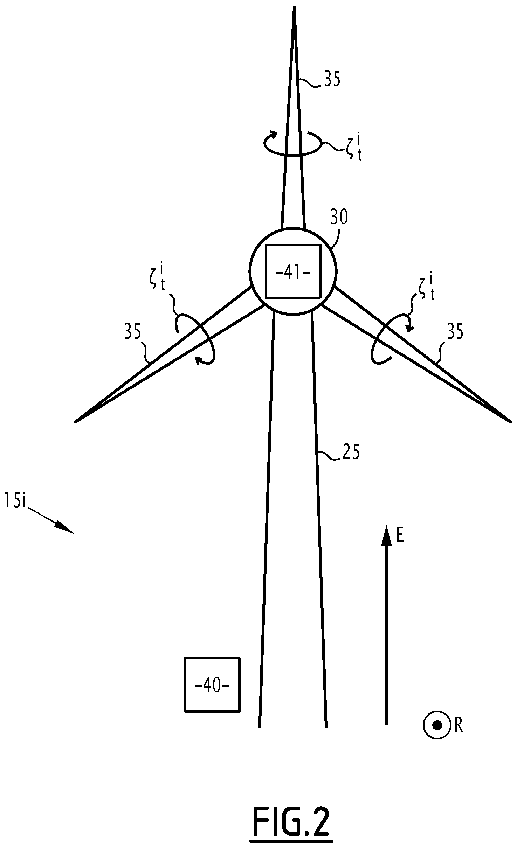

Figure 2 represents a front view of one wind turbine 15i of the wind farm 10.

The wind turbine 15i comprises a tower 25 extending along an elongation axis E.

The wind turbine 15i in addition comprises a rotor 30, for example located at an extremity of the tower 25. The rotor 30 comprises blades 35 configured to rotate around a rotation axis R, which is sensibly perpendicular to the elongation axis E.

In a known manner, the blades 35 are configured to be driven in rotation around the rotation axis R, by the wind W flowing through the wind turbine 15i. Then, under the effect of wind, the blades drive the rotor in rotation around the rotation axis R, thus producing electricity.

The wind turbine 15i in addition comprises a yaw actuator 40, and optionally a blade pitch controller 41, connected to the control system 20.

The yaw actuator 40 is configured, upon receiving a rotation command $u_t^i$ from the control system 20 at an initial time instant t, to make the rotor 30 rotate around the elongation axis E by an angle defined in the received rotation command $u_t^i$, so that the rotor 30 reaches a desired absolute yaw angle $\beta_{t+1}^i$ at the new time instant t + 1, in a predefined reference frame.

Mathematically, the configuration of each yaw actuator 40 is formulated according to the following equation:

[1]

$$\beta_{t+1}^i = f_{control}\left(\beta_t^i, u_t^i\right) = \left(\beta_t^i + u_t^i\right) mod\ 360$$

where $f_{control}$ is the control function of the yaw actuator 40, and
for any quantity $a$, $(a)mod\ 360$ is the rest of the Euclidian division of the quantity $a$ by 360.

Each absolute yaw angle $\beta_t^i$ is preferably defined as the angle formed by the rotation axis R of the wind turbine 15i, i.e. of its blades 35, in a predefined reference frame, for example pointing toward the cardinal points.

The optional blade pitch controller 41 is configured, upon receiving a value of the blade pitch angle $\zeta_{t+1}^i$, for the next time instant $t+1$, to control the blades 35 of the wind turbine 15i so that they reach said value of blade pitch angle $\zeta_{t+1}^i$.

In particular, each blade 35 is configured to rotate around its respective elongation axis thus modifying the lift of said blade. This rotation is quantified as the blade pitch angle $\zeta_t^i$ compared to predetermined reference. In the present case, for each wind turbine 15i, the blade pitch angle $\zeta_t^i$ is considered common between all blades 35 of the wind turbine 15i. In other words, the blade pitch controller 41 is configured so that each blade of the corresponding wind turbine 15i has the same blade pitch angle $\zeta_t^i$.

Back to figure 1, the control system 20 comprises an electronic control device 45 and preferably a wind sensor 50.

The control device 45 is connected to each wind turbine 15i and preferably to the wind sensor 50.

The optional wind sensor 50 is configured to estimate the wind velocity $\{V'_{t+k}\}_{k\in[\![1;L]\!]}$ and direction $\{K'_{t+k}\}_{k\in[\![1;L]\!]}$ on the wind farm 10, at plurality of successive time instants $(t+k)_{k\in[\![1;L]\!]}$, where $V_{t+k}'$ is the estimated wind velocity at time instant $t+k$ and $K_{t+k}'$ in the estimated wind direction at time instant $t+k$.

It is clear that the notation $\{t+k\}_{k\in[\![1;L]\!]}$ represents a set of successive time instants comprising $L$ time instants and starting by the time instant $t+1$ further the initial time instant $t$. A delay between two successive time instants is for example constant, and preferably comprised between ten seconds and twenty minutes.

Alternatively, the delay between two successive time instants is not constant.

Thus the notation $\{a_k\}_{k\in[\![1;L]\!]}$ is the set of successive elements $a_k$ for $k$ evolving from 1 to L. It leads that $\{t+k\}_{k\in[\![1;L]\!]}$ is equivalent to the set $t+1, t+2, ..., t+L$. Similarly, $\{V'_{t+k}\}_{k\in[\![1;L]\!]}$ is equivalent to the set $V'_{t+1}, V'_{t+2}, ..., V'_{t+L}$, and $\{K'_{t+k}\}_{k\in[\![1;L]\!]}$ is equivalent to the set $K'_{t+1}, K'_{t+2}, ..., K'_{t+L}$.

In particular, the wind sensor 50 is preferably configured to predict the wind velocity $\{V'_{t+k}\}_{k\in[\![1;L]\!]}$ and direction $\{K'_{t+k}\}_{k\in[\![1;L]\!]}$ for time instants $\{t+k\}_{k\in[\![1;L]\!]}$, via known forecast techniques.

The control device 45 comprises a receiving module 55, a calculating module 60, and a sending module 65.

In the example shown in Figure 1, the control device 25 is a computer. It comprises a processor 70 and a memory 75 associated with the processor 70.

In the example shown in Figure 1, the receiving module 55, the calculating module 60, and the sending module 65, are each implemented in the form of software, or a software brick, and can be executed by the processor 70. The memory 75 of the control device 45 is then able to store a receiving software, a calculating software, a sending software.

When the control device 45 is implemented in the form of one or more software programs, i.e. in the form of a computer program, it can also be recorded on a computer-readable medium (not shown). The computer-readable medium is, for example, a medium capable of storing electronic instructions and of being coupled to a bus of a computer system. By way of example, the readable medium is an optical disk, a magneto-optical disk, a ROM memory, a RAM memory, any type of non-volatile memory (e.g. EPROM, EEPROM, FLASH, NVRAM), a magnetic card or an optical card. A computer program containing software instructions is stored on the readable medium.

Alternatively, and not shown here, the receiving module 55, the calculating module 60, the sending module 65, are each implemented in the form of a programmable logic component, such as an FPGA (Field Programmable Gate Array), or an integrated circuit, such as an ASIC (Application Specific Integrated Circuit).

The receiving module 55 is configured to receive, for the set of successive time instants $\{t+k\}_{k\in[\![1;L]\!]}$, the estimated wind velocities $\{V'_{t+k}\}_{k\in[\![1;L]\!]}$ and the estimated wind directions $\{K'_{t+k}\}_{k\in[\![1;L]\!]}$ of the wind W, on the wind farm 10.

Preferably, the receiving module 55 is configured to received said estimated wind velocities $\{V'_{t+k}\}_{k\in[\![1;L]\!]}$ and directions $\{K'_{t+k}\}_{k\in[\![1;L]\!]}$, from the wind sensor 50.

Alternatively, if the control system 20 does not comprise any wind sensor 50, the receiving module 55 is configured to receive said wind velocities $\{V'_{t+k}\}_{k\in[\![1;L]\!]}$ and directions $\{K'_{t+k}\}_{k\in[\![1;L]\!]}$, from an external device, not represented, for example a weather forecasting system excluded from the control system 20.

In addition, the receiving module 55 is configured to receive the absolute yaw angle $\beta_t^i$ of each wind turbine 15i at said first time instant $t$. Preferably, the receiving module 55 is configured to receive each absolute yaw angle $\beta_t^i$ from the respective yaw actuator 40, and/or to keep it in its memory 75.

Preferably, the receiving module is further configured to receive a grid constraint $\{P_{t+k}^{max}\}_{k\in[\![1;L]\!]}$ for each time instant $t + k$ of the set of successive time instants $\{t+k\}_{k\in[\![1;L]\!]}$. For each time further instant $t + k$, the grid constraint $\{P_{t+k}^{max}\}_{k\in[\![1;L]\!]}$ is a maximal power that a grid connected to the wind farm 1 is configured to handle. In other words, for each time instant $t + k$, the grid constraint $P_{t+k}^{max}$ is the maximum power that can be output from the wind farm 10 without providing substantial losses in the grid.

Preferably also, the receiving module 55 is further configured to receive a set of power weightings $\{E_{t+k}\}_{k\in[\![1;L]\!]}$, the set of power weightings $\{E_{t+k}\}_{k\in[\![1;L]\!]}$ comprising a weighting for each time instant $t + k$. Each power weighting $E_{t+k}$ preferably quantifies an importance that is given to the fact to produce more at a specific time instant $t + k$ than another.

As an example the power weighting $E_{t+k}$ depends on the electricity price at the corresponding time instant $t + k$.

According to another example, the power weighting $E_{t+k}$ depends on the electricity demand at same time instant $t + k$. In such case, the power weighting may be greater for time instants $t + k$ corresponding to high electricity demand instant, such as evening or morning, than during low electricity demand instants, such as midday or night.

According to another optional complement, the receiving module 55 is in addition configured to receive, a deactivation constraint for each time instant $t + k$ of the set of successive time instants $\{t+k\}_{k\in[\![1;L]\!]}$. For each time instant $t + k$ and for each wind turbine 15i, the deactivation constraint indicates if each the wind turbine 15i produces power or not.

As an example, due to meteorological conditions or to due to the passage of wild animals through the wind farm 10, it may be required to deactivate some wind turbines 15i of the wind farm 10 for different time instants $t + k$.

Preferably, the receiving module 55 is further configured to receive a maximum misalignment constraint $\theta_{max}$. This maximum misalignment constraint $\theta_{max}$ is the maximum yaw angle $\theta_t^i$ that a wind turbine 15i may have with the wind direction $K_t'$ to ensure a production of said wind turbine without causing damage of said wind turbine 15i.

More preferably also, the receiving module 55 is configured to receive a discount factor $y$, that will be detailed latter. The discount factor $y$ is preferably a value comprised between 0 and 1.

The calculating module 60 is configured to determine, at said first time instant $t$ and for each wind turbine 15i, a respective rotation command $u_t^i$, from the estimated wind directions $\{K_{t+k}'\}_{k\in[\![1;L]\!]}$ and estimated wind velocities of the wind $\{V_{t+k}'\}_{k\in[\![1;L]\!]}$ on the wind farm 10, by solving an optimization problem.

The optimization problem aims at maximizing an objective function $f_{obj}$ representative of a power generated by the wind farm 10 and representative of a fatigue of the wind turbines 15i of the wind farm 10, for said set of successive time instants $\{t+k\}_{k\in[\![1;L]\!]}$. The objective function $f_{obj}$ comprising a first component $C1$ and a second component $C2$, and preferably a third component $C3$.

The first component $C1$ is representative of power generated by the wind farm (10) for said set of successive time instants $\{t+k\}_{k\in[\![1;L]\!]}$.

To this end, the first component C1 preferably depends on the yaw angle $\theta_{t+k}^i$ between the rotation axis R of each wind turbine 15i and the wind direction $K_{t+k}'$ at each instant $t + k$. Said yaw angle angle $\theta_{t+k}^i$, further denoted relative yaw angle $\theta_{t+k}^i$, depends on the rotation command $u_{t+k-1}^i$ given to said wind turbine 15i at the preceding instant $t + k - 1$.

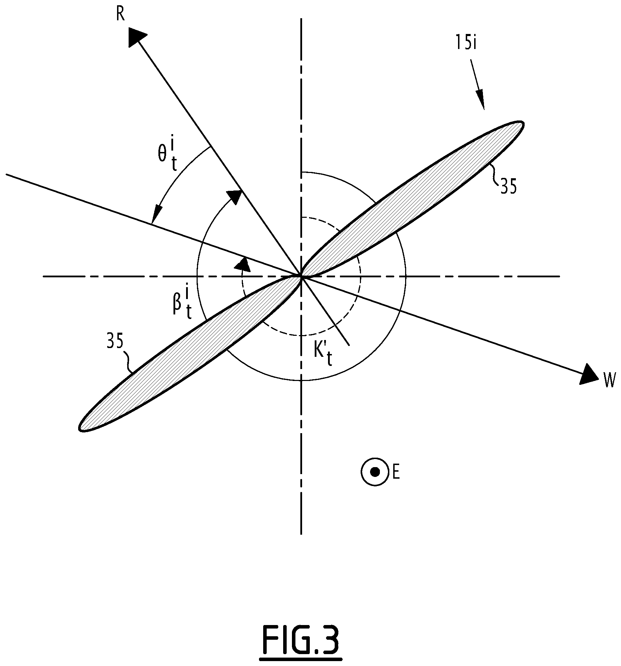

As an example and in reference to Figure 3 showing a top view of a respective wind turbine 15i, for a wind $W$ having a direction $K_t'$ reaching a respective wind turbine 15i having an absolute yaw angle $\beta_t^i$, a relative yaw angle $\theta_t^i$ between the wind $W$ *and* the wind turbine 15i, is equal to the following equation:

[2]

$$\theta_t^i = f_{yaw}\left(K_t{'}, \beta_t^i\right) = \left(\left(K_t{'} - \beta_t^i + 180\right) mod\ 360\right) - 180$$

It leads from this equation that the absolute yaw angle $\beta_t^i$ may also be derived from the relative yaw angle $\theta_t^i$ and the wind direction $K_t'$ according to the following formula:

[3]

$$\beta_t^i = f_{abs\_yaw}\left(K_t{'}, \theta_t^i\right) = \left(\left(K_t' - \theta_t^i - 180\right) mod\ 360\right) + 180$$

In this example, the wind direction $K_t'$ is defined as the angle between a mean orientation the wind $W$ between time instants $t$ and $t + 1$, and a predefined frame, the frame for example pointing toward the cardinal points.

In the previous equations [2] and [3], adding and subtracting by 180 ensures that the relative yaw angle $\theta_t^i$ stays within the range defined by -180° and +180°. As visible in Figure 3, it is ensured that $\left(\beta_t^i + \theta_t^i\right) mod\ 360 = K_t'$. Then, a positive value of the relative yaw angle $\theta_t^i$ indicates that the wind turbine 15 is rotated anti-clockwise from the wind direction $K_t'$, while a negative value of the relative yaw angle $\theta_t^i$ indicates that the wind turbine 15 is rotated clockwise from the wind direction $K_t'$.

Based on the preceding equation [2], each relative yaw angle $\theta_t^i$ depends on the corresponding absolute yaw angle $\beta_t^i$ and the wind direction $K_t'$. One may notice that, based on equation [1], each absolute yaw angle $\beta_{t+1}^i$ at the next time instant $t + 1$ depends on the corresponding rotation command $u_t^i$ at the initial time instant $t$. Thus, each relative yaw angle $\theta_{t+1}^i$ at said next time instant $t + 1$ depends on said rotation command $u_t^i$.

According to an optional complement, the first component $C1$ comprises a first contribution $C1_{t+k}$ for each time instant $t + k$.

Preferably, each first contribution $C1_{t+k}$ is estimated, at least partially, by a power simulator as a function of the relative yaw angle $\theta_{t+k}^i$ of each wind turbine 15i at said time instant $t + k$, the deactivation constraint, and the estimated wind direction $K_{t+k}'$ and velocity $V_{t+k}'$ at said instant $t + k$.

Preferably, each first contribution $C1_{t+k}$ is weighted by the discount factor $y$ making decrease the influence, on the first contributions $C1_{t+k}$, as a function of the time instants $\{t + k\}_{k \in [\![1;L]\!]}$ remoting from the initial time instant $t$. It gives more importance to first contributions $C1_{t+k}$ closed to the initial time instant $t$ than to the first contribution remote from the initial time instant $t$.

Optionally, each first contribution $C1_{t+k}$ is in addition estimated based on a blade pitch angle $\zeta_{t+k}^i$ of each wind turbine at the corresponding time instant $t + k$.

Said blade pitch angle $\zeta_{t+k}^i$ will be detailed below.

As an example, the power simulator is a low fidelity simulator making is possible to provide an estimation of the power generated by the wind farm at any time instant $t$.

For instance, the simulator is FLORIS. FLORIS is a simulator know *per se*.

More preferably, each first contribution $C1_{t+k}$ is the product of the estimated power generated by the wind farm at instant $t + k$ and the weighting constraint $E_{t+k}$ at said instant $t + k$.

For example, the first component $C1$ is the sum of each first contributions $C1_{t+k}$, such that:

[4]

$$C1 = \sum_{k=1}^{L} \gamma^{k-1}. E_{t+k}. Power\ (\Theta_{t+k}, x_{t+k}, K'_{t+k}, V'_{t+k})$$

where: $\Theta_{t+k}$ is the vector comprising, for a given instant $t + k$, the relative yaw angle $\theta^i_{t+k}$ of each wind turbine 15i, $x_{t+k}$ is the vector comprising, for a given instant $t + k$, the deactivation constraint of each wind turbine 15i, i.e. this comprises for each wind turbine 15i, a value equal to 0 is said wind turbine 15i is deactivated according to the deactivation constraint, and 1 else case, and *Power* is the power function defined by the simulator that provide the estimated power generated by the wind farm 10.

According to the optional complement wherein each first contribution $C1_{t+k}$ in addition depends on the blade pitch angle $\zeta^i_{t+k}$ of each wind turbine 15i, the preceding formula may be reformulated as follow:

[5]

$$C1 = \sum_{k=1}^{L} \gamma^{k-1}. E_{t+k}. Power\ (\Theta_{t+k}, x_{t+k}, K'_{t+k}, V'_{t+k}, Z_{t+k})$$

where $Z_{t+k}$ is the vector comprising, for a given instant $t + k$, the blade pitch angle $\zeta^i_{t+k}$ of each wind turbine 15i.

The second component $C2$ is representative of the fatigue of each wind turbine 15i of the wind farm, surrogated over the set of successive time instants $\{t + k\}_{k\in[\![1;L]\!]}$. In particular, the second component $C2$ depends on the fatigue induced by a moment, or torque, of wind forces on each wind turbine 15i, at each time instant $t + k$. Such fatigue is preferably a fatigue component due to a misalignment between an orientation of the wind turbine 15i and the estimated wind directions $\{K'_{t+k}\}_{k\in[\![1;L]\!]}$. The fatigue on each wind turbine 15i, is due to multiple mechanical torques induced by the wind that apply on the wind turbine 15i. This fatigue can thus be separated in several components. Preferably, the considered component is the one that is due to said misalignment, i.e. to the relative angles $\theta^i_{t+k}$.

Similarly, as for the first component $C1$, the second component $C2$, comprises, for each time instant $t + k$, a second contribution $C2_{t+k}$.

Preferably, each second contribution $C2_{t+k}$ is estimated, at least partially, by a fatigue simulator, as function of the relative yaw angle $\theta^i_{t+k}$ of each wind turbine 15i at said time instant $t + k$, the deactivation constraint, and the estimated wind direction $K'_{t+k}$ and velocity $V'_{t+k}$ at said instant $t + k$.

Optionally, each second contribution $C2_{t+k}$ is in addition estimated based on a blade pitch angle $\zeta^i_{t+k}$ of each wind turbine.

The fatigue simulator is configured to determine, from a list of parameters, the fatigue of each of wind turbine 15i of the wind farm 10. The list of parameters preferably comprises: the wind direction $K'_{t+k}$, the wind velocity $V'_{t+k}$, the relative yaw angle $\theta^i_{t+k}$ of each wind turbine 15i, the deactivation constraint, and more preferably the blade pitch angle $\zeta^i_{t+k}$ of each wind turbine 15i, a the considered instant $t + k$.

The fatigue simulator for example comprises a surrogate curve that makes it possible to estimates the fatigue given this list of parameters. Said surrogate curve preferably results from an interpolation of data output from a high fidelity simulator implementing CFD computations.

Thus, the fatigue simulator is configured to obtain a vector comprising, for each wind turbine 15i, the respective fatigue. The fatigue simulator is further configured to determine the fatigue at said instant $t + k$ according to the following formula

[6]

$$Fatigue\ (\Theta_{t+k}, x_{t+k}, K'_{t+k}, V'_{t+k}) = \left(\sum_{i=1}^{N} \left(f_{t+k}^{i}\right)^{p}\right)^{\frac{1}{p}}$$

where $f_{t+k}^{i}$ is the fatigue of wind turbine 15i at instant $t + k$,
$p$ is a predetermined value greater to 1

More preferably, each second contribution $C2_{t+k}$ is the product of the estimated fatigue and of the opposite of a predetermined fatigue coefficient $\mu$. The predetermined fatigue coefficient $\mu$ makes it possible to balance the influence of the fatigue on the objective function $f_{obj}$. The predetermined coefficient $\mu$ being positive, it is clear that the second contributions $C2_{t+k}$ penalize the objective function $f_{obj}$. Actually, the second component $C2$ aims at penalizing the objective function $f_{obj}$ to find a trade off between power generated and fatigue endured.

Similarly as for the first contributions $C1_{t+k}$, the second contributions $C2_{t+k}$ are weighted by the same discount factor $\gamma$.

For example, the second component $C2$ is the sum of each second contributions $C2_{t+k}$, such that:

[7]

$$C2 = \sum_{k=1}^{L} \gamma^{k-1} \cdot (-\mu) \cdot Fatigue\ (\Theta_{t+k}, x_{t+k}, K'_{t+k}, V'_{t+k})$$

where *Fatigue* is the function defined by the fatigue simulator that provide the estimated fatigue of the wind turbines 15i, surrogated over the entire wind farm 10.

Similarly as for the first component $C1$, the second component $C2$ preferably further depends on the blade pitch angle $\zeta_{t+k}^{i}$ of each wind turbine, at each instant $t + k$.

In that case, the preceding equation [7] may be reformulated as follow:

[8]

$$C2 = \sum_{k=1}^{L} \gamma^{k-1} \cdot (-\mu) \cdot Fatigue\ (\Theta_{t+k}, x_{t+k}, K'_{t+k}, V'_{t+k}, Z_{t+k})$$

The optional third component $C3$ is representative of the rotation of each wind turbine 15i between two successive time instants $t + k - 1$, $t + k$ of the set of successive time instants $\{t + k\}_{k\in[\![1;L]\!]}$. The third component $C3$ penalizes the objective function $f_{obj}$ as a function of a variation $\Delta\beta_{t+k}^{i}$ of the wind turbine orientation $\beta_{t+k}^{i}$, also denoted absolute yaw angle, between two successive time instants $t + k - 1$, $t + k$.

For instance, the third component $C3$ comes from a constraint limiting the motion each wind turbine 15i between two successive instants $t + k - 1$, $t + k$, which has been relaxed according to Lagrangian relaxation technic. In an embodiment, the third component $C3$ is formulated as follow:

[9]

$$C3 = \sum_{k=1}^{L} \gamma^{k-1}(-\delta) \cdot L(B_{t+k-1}, B_{t+k})$$

where $\delta$ is a predetermined positive coefficient,
$L(.,.)$ is a predetermined function, preferably at least a function twice differentiable continuously,

$B_{t+k}$ is the vector comprising for each wind turbine 15i, its respective absolute yaw angle $\beta_{t+k}^{i}$, at time instant $t + k$.

For instance, the predetermined function $L(.,.)$ is the Manhattan distance, Euclidian distance, any Minkowski distance, or in general, $L(x,y) = \left(\sum_{i=1}^{n} f(x_i - y_i)^p\right)^{\frac{1}{p}}$ with f a positive differentiable function, and p a nonzero natural number.

Finally, the objective function $f_{obj}$ may be formulated as the sum of the first $C1$ and the second $C2$ component such that:

[10]

$$
f_{obj} = \sum_{k=1}^{L} \gamma^{k-1} . E_{t+k} . Power(\Theta_{t+k}, x_{t+k}, K'_{t+k}, V'_{t+k}, Z_{t+k})
$$

$$
+ \sum_{k=1}^{L} \gamma^{k-1} . (-\mu) . Fatigue(\Theta_{t+k}, x_{t+k}, K'_{t+k}, V'_{t+k}, Z_{t+k})
$$

$$
= \sum_{k=0}^{L} \gamma^{k} . \big( E_{t+k} . Power(\Theta_{t+k}, \Phi_{t+k}, x_{t+k}, K'_{t+k}, V'_{t+k}, Z_{t+k})
$$

$$
- \mu . Fatigue(\Theta_{t+k}, \Phi_{t+k}, x_{t+k}, K'_{t+k}, V'_{t+k}, Z_{t+k}) \big)
$$

where $Z_{t+k}$ is only present if the components $C1$, $C2$ depends on the blade pitch angles $\zeta^i_{t+k}$.

According to the optional complement wherein the objective function $f_{obj}$ in addition comprises the third component $C3$, said objective function is reformulated as:

[11]

$$
f_{obj} = \sum_{k=1}^{L} \gamma^{k-1} . \big( E_{t+k} . Power(\Theta_{t+k}, x_{t+k}, K'_{t+k}, V'_{t+k}, Z_{t+k})
$$

$$
- \mu . Fatigue(\Theta_{t+k}, x_{t+k}, K'_{t+k}, V'_{t+k}, Z_{t+k}) - \delta . L(B_{t+k-1}, B_{t+k}) \big)
$$

where $Z_{t+k}$ is only present if the components $C1$, $C2$ depends on the blade pitch angles $\zeta^i_{t+k}$.

Finally, according to an example, the optimization problem that the calculating module 60 is configured to solve is the following:

[12]

$$
\max_{\Theta_1,\dots,\Theta_L} f_{obj} = C1 + C2
$$

Considering the optional complement wherein the objective function comprises the third component $C3$, the optimization problem to solve may be reformulated as:

[13]

$$
\max_{\Theta_1,\dots,\Theta_L} f_{obj} = C1 + C2 + C3
$$

Considering the optional complement wherein the misalignment constraint $\theta_{max}$ is received, said optimization problem may be reformulated as:

[14]

$$\max_{\Theta_1,\dots,\Theta_L} f_{obj}$$

subject to

$$\left| \theta_{t+k}^i \right| \leq \theta_{max} \quad \forall i \in [\![0; N-1]\!] \; \forall k \in [\![1; L]\!]$$

where |.| is the function absolute value, and
where $f_{obj}$ is chosen according to equation [10] or [11].

Details of solving such optimization problem by the calculating module 60 will be provided below in reference to a control method 100 implemented by the electronic control device 45.

From solving said optimization problem, the calculating module 60 is thus configured to obtain a desired relative yaw angle $\hat{\theta}_{t+k}^i$ for each wind turbine 15i and for each time instant $t + k$.

The calculating module 60 is further configured to determine, based on the desired yaw angles $\hat{\theta}_{t+1}^i$ corresponding to the first time instant, a rotation command $u_t^i$, for each wind turbine 15i, preferably based on the estimated wind directions $K_t'$, $K_{t+1}'$ of said first instant and of the next one. As a example, the calculation module 60 is configured to determine the rotation command according to the following formula:

[15]

$$u_t^i = (\hat{\beta}_{t+1}^i - \beta_t^i) \; mod \; 360 = \left( (K_{t+1}' + \hat{\theta}_{t+1}^i - K_t' - \theta_t^i) \; mod \; 360 \right)$$

where $\hat{\beta}_{t+1}^i$ is the absolute yaw angle corresponding to the desired relative yaw angle $\hat{\theta}_{t+1}^i$.

The calculating module 60 is optionally configured to set up the blade pitch angle $\zeta_{t+k}^i$ of each wind turbine 15i for each time instant $t + k$ of the set of successive time instants $\{t+k\}_{k\in[\![1;L]\!]}$ from the grid constraints $\{P_{t+k}^{max}\}_{k\in[\![1;L]\!]}$.

To this end, the calculating module 60 is preferable configured to initialize, for each time instant $t + k$ and for each wind turbine 15i, the respective blade pitch angle $\zeta_{i+k}^i$ to a predetermined initial value. The calculating module 60 is then preferably configured to determine, based on the power simulator, the power generated by the wind farm 10 for said set of successive time instants $\{t+k\}_{k\in[\![1;L]\!]}$ if each wind turbine 15i with each blade pitch angle $\zeta_{i+k}^i$ at the predetermined initial value.

The calculating module is configured to then determine, for each time instant $t + k$, a respective penalty coefficient $v_{t+k}$ corresponding to a ratio between the determined power and the corresponding grid constraint $P_{t+k}^{max}$ of the respective time instant $t + k$.

The calculating module 60 is then configured to set up the value of each blade pitch angle $\zeta_{t+k}^i$ based on the corresponding penalty coefficient $v_{t+k}$ and preferably on the cumulated fatigue of the wind turbine 15i over a certain setpoint in time. The setpoint time is considered here equal to $t$. The cumulated fatigue is thus for example equal to:

[16]

$$F_{t+k}^i = \sum_{j=0}^{k} Fatigue_i(\theta_{t+j}^i, \beta_{t+j}^i, x_{t+j}^i, k'_{t+j}^i, v'_{t+j}^i)$$

where $k'^i_{t+j}, v'^i_{t+j}$ are respectively the wind direction and wind speed computed at local wind turbine coordinates,

$$Fatigue_i(\theta^i_{t+j}, \beta^i_{t+j}, x^i_{t+j}, k'^i_{t+j}, v'^i_{t+j})$$ is the fatigue of the corresponding wind turbine 15i at instant $t + j$.

The calculating module 60 is configured to set up the value of each blade pitch angle $\zeta^i_{t+k}$ so that, for each instant $\{t + k\}_{k \in [\![1;L]\!]}$, the power generated by the wind farm 10 at the corresponding time instant $t + k$ and considering the set up value of each blade pitch angle $\zeta^i_{t+k}$, is less than or equal to the grid constraint $P^{max}_{t+k}$.

To this end, the calculating module 60 is preferably configured to choose, from a discrete set of possible pitch angles (for example 0°,1°,...,10°), the blade pitch angles $\zeta^i_{t+k}$ corresponding to a derating proportionality of $\frac{F^i_{t+k}}{v_{t+k}\sum_j F^j_{t+k}}$, for each wind turbine 15i if the penalty coefficient $v_{t+k}$ is greater than 1, and a blade pitch angle $\zeta^i_{t+k}$ equal to 0° else.

In other words, if the penalty coefficient $v_{t+k}$ is greater than 1, then the power delivered at time $t + k$ by the wind turbine 15i pitched by the blade pitch angle $\zeta^i_{t+k}$ will be less than, or equal to, $\frac{F^i_{t+k}}{v_{t+k}\sum_j F^j_{t+k}}$ times the power of the same wind turbine in a unpitched wind farm setting.

The sending module 65 is configured to send the determined rotation command $u^i_t$, to each respective wind turbine 15i for the rotation of each wind turbine 15i.

In the optional complement wherein the calculating module 60 is configured to set up the blade pitch angle $\zeta^i_{t+k}$ of each wind turbine 15i, the sending module 65 is further configured to send, to each wind turbine 15i, the respective blade pitch angle $\zeta^i_{t+1}$ corresponding to the next instant $t + 1$.

Each wind turbine 15i, is configured to, upon receiving the rotation command $u^i_t$ and the blade pitch angle $\zeta^i_{t+1}$ is applicable, implement the received command(s).

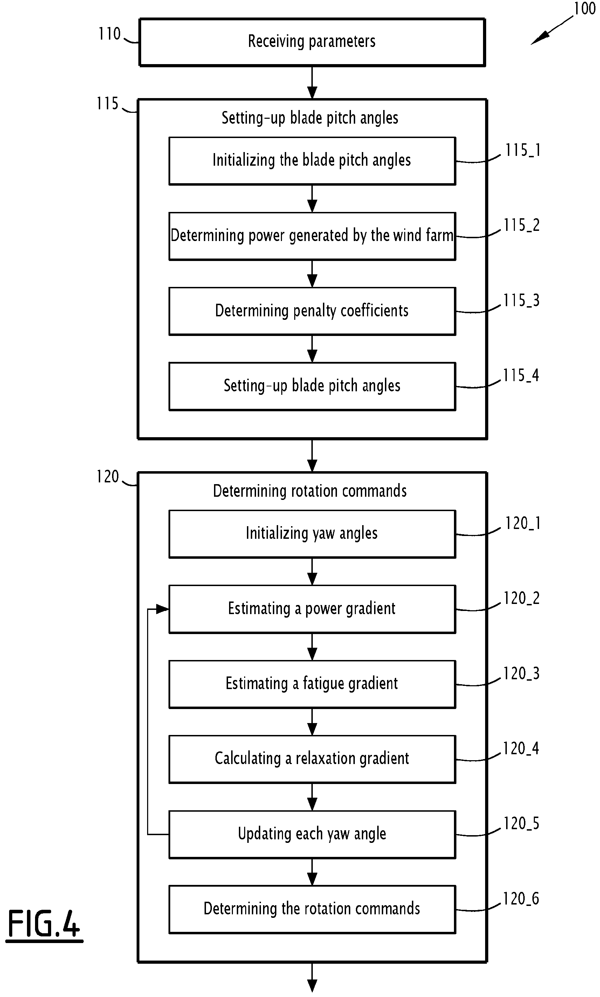

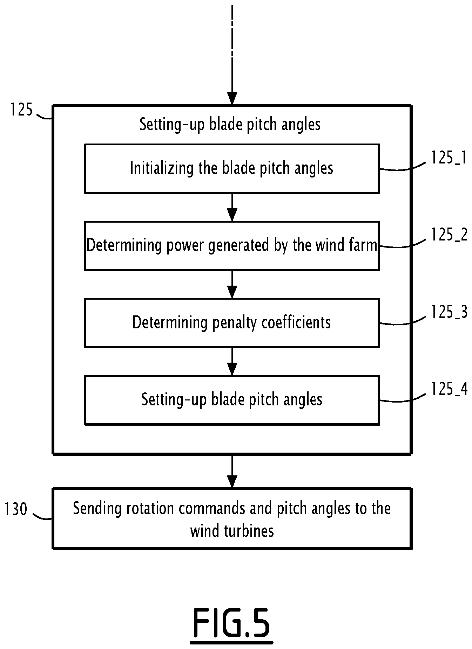

The functioning of wind farm 10 and in particular of the control system 20 will now be detailed by a control method 100 and in reference to figures 4 and 5 representing a flowchart of said control method 100.

At an initial time instant $t$, each wind turbines 15i has an absolute yaw angle $\beta^i_t$ forming a relative yaw angle $\theta^i_t$ with the wind direction $K_t'$. Initially also, the wind velocities $\{V'_{t+k}\}_{k \in [\![1;L]\!]}$ and wind directions $\{K'_{t+k}\}_{k \in [\![1;L]\!]}$ are estimated for each time instant $\{t + k\}_{k \in [\![1;L]\!]}$ over an horizon $L$, as previously described, preferably by the sensor 50.

The method 100 comprises a receiving step 110, during which the electronic control device 45 receives, for the set of successive time instants $\{t + k\}_{k \in [\![1;L]\!]}$, the estimated wind velocities $\{V'_{t+k}\}_{k \in [\![1;L]\!]}$ and the estimated wind directions $\{K'_{t+k}\}_{k \in [\![1;L]\!]}$ of the wind $W$, on the wind farm 10.

Preferably, during the receiving step 110, the electronic control device 45 in addition receives the grid constraint $\{P^{max}_{t+k}\}_{k \in [\![1;L]\!]}$ for each time instant $t + k$ of the set of successive time instants $\{t + k\}_{k \in [\![1;L]\!]}$.

Optionally, during the receiving step 110, the electronic control device 45 in addition receives the set of power weightings $\{E_{t+k}\}_{k \in [\![1;L]\!]}$.

Optionally, during the receiving step 110, the electronic control device 45 in addition receives the deactivation constraint for each instant $\{t + k\}_{k \in [\![1;L]\!]}$.

Optionally, during the receiving step 110, the electronic control device 45 further receives the maximum misalignment constraint $\theta_{max}$.

Preferably, the control method in addition comprises a first setting up step 115 wherein the blade pitch angle $\zeta^i_{t+k}$ of each wind turbine 15i is set up for each time instant $t + k$ from the grid constraint $\{P^{max}_{t+k}\}_{k \in [\![1;L]\!]}$.

Said first setting up step 115 advantageously comprises an initializing sub step 115_1, wherein the calculating module 60 initializes the blade pitch angle $\zeta_{t+k}^{i}$ of each wind turbine 15i for each time instant $t + k$, at a predetermined initial value.

Then, during a first determining sub step 115_2, the calculating module 60 determines, based on the power simulator, the power generated by the wind farm 10 for said set of successive time instants $\{t + k\}_{k \in [\![1;L]\!]}$ if each wind turbine 15i faces the estimated wind direction $K_{t+k}'$ with it blade pitch angle $\zeta_{i+k}^{i}$ at the predetermined initial value.

The, during a second determining sub step 115_3, the calculating module 60 determines, for each time instant $t + k$, a respective penalty coefficient $\nu_{t+k}$ corresponding to a ratio between the determined power and the corresponding grid constraint $P_{t+k}^{max}$ of the respective time instant $t + k$. As an example, each respective penalty coefficient $\nu_{t+k}$ is preferably equal to:

$$[17]$$

$$\nu_{t+k} = \frac{P_{t+k}}{P_{t+k}^{max}}$$

where $P_{t+k}$ is the power generated by the wind farm 10 at instant $t + k$.

It is thus clear that the penalty coefficient $\nu_{t+k}$ is greater than one if the determined power is greater that the grid constraint $P_{t+k}^{max}$.

Then, during a setting up sub step 115_4, the calculating module 60 sets up the value of each blade pitch angle $\zeta_{t+k}^{i}$ based on the corresponding penalty coefficient $\nu_{t+k}$ and preferably on the cumulated fatigue of the wind turbine 15i from the fixed time setpoint.

To this end, the calculating module 60 modify each blade pitch angle $\zeta_{t+k}^{i}$ according to the procedure described above.

It is thus clear that, after the setting up sub step 115_4, for each instant $\{t + k\}_{k \in [\![1;L]\!]}$, the power generated by the wind farm 10 at the corresponding time instant $t + k$ and considering the set up value of each blade pitch angle $\zeta_{t+k}^{i}$, is equal to the grid constraint $P_{t+k}^{max}$.

The control method further comprises a determining step 120, wherein the calculating module 60 determines, for each wind turbine 15i, the respective rotation command $u_t^i$ from the set of estimated wind directions $\{K_{t+k}'\}_{k \in [\![1;L]\!]}$ and the set of velocities of the wind $\{V_{t+k}'\}_{k \in [\![1;L]\!]}$ on the wind farm 10, by solving said optimization problem over an horizon $L$.

To this end, the determining step 120 preferably comprises an initializing sub step 120_1, wherein the calculating module 60 initializes at predetermined values, a relative yaw angle $\theta_{t+k}^{i}$ each wind turbine 15i, for each time instant $t + k$ of the set of successive time instants $\{t + k\}_{k \in [\![1;L]\!]}$, forming a set of relative yaw angle $\{\theta_t^i\}_{k \in [\![1;L]\!], i \in [\![0;N-1]\!]}$. Said set of angles $\{\theta_t^i\}_{k \in [\![1;L]\!], i \in [\![0;N-1]\!]}$ being further denoted operating point $X$.

Preferably, the determining step 120 further comprises a first estimating sub step 120_2, a second estimating sub step 120_3, an updating sub step 120_5 that are iterated until a predetermined stooping criterion is met.

During the first estimating sub step 120_2, the calculating module 60 estimates a gradient $\overrightarrow{\nabla C1}$ of the first component $C1$ at the operating point $X$, as a function of said angles $\theta_{t+k}^{i}$, by performing several estimations of the first component $C1$ with the power simulator.

As known *per se,* a gradient of a quantity at an operating point is a vector of the partial derivative of the quantity, evaluated at said operating point.

Advantageously, the calculating module 60 estimates said gradient $\overrightarrow{\nabla C1}$ at the operating point $X$, according to a finite difference technic, known *per se.*

The finite difference technic consists, in the present case, in determining for each component $x$ of the operating point $X$, the partial derivative of the first component $C1$ at said operating point, preferably according to said formula:

[18]

$$\frac{\partial C1}{\partial x}(X) = \frac{C1(X + \epsilon. I_x) - C1(X - \epsilon. I_x)}{2\epsilon}$$

where $\varepsilon$ is a predetermined value aiming at being close to 0, for example equal to 0.1 or 0.01,
$I_x$ is a vector wherein each component is equal to 0 except the $x$ component which is equal to 1,
$C1(X + \varepsilon. I_x)$ and $C1(X - \varepsilon. I_x)$ are evaluated based on the power simulator.

During the second estimating sub step 120_3, the calculating module 60 estimates a gradient $\overrightarrow{\nabla C2}$ of the second component $C2$ at the operating point. Said estimation is performed similarly as for the first gradient except that $C2(X + \varepsilon. I_x)$ and $C2(X - \varepsilon. I_x)$ are each estimated based on the fatigue simulator instead of the power simulator.

Preferably, if the control method comprises the first setting-up step 115, then during the first 120_2 and the second 120_3 estimating sub steps, the values $C1(X + \varepsilon. I_x)$, $C1(X - \varepsilon. I_x)$, $C2(X + \varepsilon. I_x)$, and $C2(X - \varepsilon. I_x)$ are evaluated considering the blade pitch angles $\zeta_{t+k}^i$ values set-up during the first setting up step 115.

During the updating step 120_5, the calculation module 60 update the operating point $X$ based on the estimated gradients $\overrightarrow{\nabla C1}$, $\overrightarrow{\nabla C2}$, preferably according to projected gradient descent technic, known *per se.*

This technic makes sure that the updated operating point belongs to a feasible space wherein each relative yaw angle $\theta_{t+k}^i$ remains between the bounds $-\theta_{max}$, $\theta_{max}$ formed by the received misalignment constraint $\theta_{max}$.

The predetermined stopping criterion is for example, a maximum number of iteration or a minimal value of the norm of the gradients $\overrightarrow{\nabla C1}$, $\overrightarrow{\nabla C2}$.

After these iterations, the determining step 120 preferably comprises a determining sub step 120_6 wherein the calculating module 60 determines, for each wind turbine 15i, the rotation command $u_t^i$ as a function the operating point $X$ lastly updated.

Actually, the updated operating point $X$ comprises the relative yaw angle $\theta_{t+1}^i$ of each wind turbine 15i, for the next instant $t + 1$. Then, based on said relative yaw angles $\theta_{t+1}^i$, the estimated wind directions $K'_{t+1}$ at the the next instant $t + 1$, and the current relative absolute yaw angle $\beta_t^i$, the calculating module 60 computes the rotation commands $u_t^i$ based on equation [15].

Optionally, if the objective function $f_{obj}$ comprises the third component $C3$, the determination step 120 in addition comprises a calculation sub step 120_4 between the second estimation sub step 120_3 and the updating sub step 120_5 which is iterated similarly as the first 120_2 and second 120_3 estimation sub steps and the updating sub step 120_5.

During the calculating sub step 120_4, the calculating module 60 computes the gradient $\overrightarrow{\nabla C3}$ of the third component. Said computation is not similar as the estimation performed during the first 120_2 and the second 120_3 estimating sub steps since the third component $C3$ is determined analytically.

Hence, the third gradient $\overrightarrow{\nabla C3}$ can be derived analytically.

For instance, when the third component $C3$ is $\sqrt{\sum_{i=1}^{n}\left(\beta_{t+1}^i - \beta_t^i\right)^2}$, its gradient is:

[19]

$$\overrightarrow{\nabla C3} = \frac{B_{t+1}^i - B_t^i}{\sqrt{\sum_{i=1}^{n}\left(\beta_{t+1}^i - \beta_t^i\right)^2}}$$

In that case, during the updating sub step 120_5, the operating point $X$ is further updated as a function of the third gradient $\overrightarrow{\nabla C3}$.

In reference to figure 5, optionally, the control method 100 further comprises a second step 125 of setting up the blade pitch angles $\zeta_{t+k}^i$. Similarly as for the first setting up 115, the second setting up step 125 comprises a respective initializing sub step 125_1, a respective first determining sub step 125_2, a respective second determining sub step 125_3 and a respective setting up sub step 125_4.

Said sub steps are preferably similar as the ones of the first setting up step 115, except that during the respective first determining sub step 125_2, the relative yaw angles $\theta^i_{t+k}$ of each wind turbine 15i are the one of the lastly updated operating point $X$. In other words, during the respective first determination sub step 125_2 the power generated by the wind farm 10 is determined considering that each wind turbine 15i follows the respective determined rotation command $u^i_t$ and, for instants $t + k$ appropriate rotations commands to make the relative yaw angles of the wind turbine 15i equal to the ones in the lastly updated operating point $X$.

In addition, if the control method 100 comprises both the setting up step 115 and the setting up step 125, then, during the initializing sub step 125_1 of the second setting up step 125, the blade pitch angles $\zeta^i_{t+k}$ are initialized at the values determined during the setting up sub step 115_4 of the first setting up step 115.

It is clear that according to a specific embodiment, the control method 100 does not comprises both setting up steps 115, 125.

For example, in an embodiment, the control method only comprises the first setting up step 115.

For example, in another embodiment, the control method only comprises the second setting up step 125.

Finally, for example, in another embodiment, the control method 100 does not comprises any setting up step. In that last example, the blade pitch angles $\zeta^i_{t+k}$ of each wind turbines 15i at each instant $t + k$ are predefined.

The control method 100 further comprises a sending step 130 wherein the sending module 65 send, to each wind turbine, the determined rotation command $u^i_t$. Preferably, during the sending step 130, the sending module 65 only send the rotation commands $u^i_t$ corresponding to the pending time instant.

Optionally, during the sending step 130, the sending module in addition sends, to each wind turbine 15i, the respective blade pitch angle $\zeta^i_{t+1}$ at the following time instant $t + 1$.

Optionally, the steps of the control method 100 are then iterated for the next time instant $t + 1$. As an example, in the next iteration, the initial time instant is the next time instant $t + 1$ of the preceding iteration. In the next iteration, the plurality of successive time instants extends from $t + 1$ until $t + L + 1$ so that the horizon, i.e. the number of time instants minus 1, remains equal to L.

Thanks to the electronic control device 45 and the control method 100 according to the invention, it possible to improve the wind farm control in order to output more power.

**Claims**

1. A control method (100) for controlling a wind farm (10) comprising a plurality of wind turbines (15i), based on a plurality of estimated wind velocities ( $\{V'_{t+k}\}_{k\in[\![1;L]\!]}$ ) and a plurality of estimated wind directions ( $\{K'_{t+k}\}_{k\in[\![1;L]\!]}$ ) of the wind (W) on the wind farm (10),

   each wind turbine (15i) being configured, upon receiving a rotation command ( $u^i_t$ ), to rotate, around an elongation axis (E) respective of the wind turbine (15i), according to said rotation command ( $u^i_t$ ),
   the method (100) being implemented by an electronic control device (45) and comprising the following steps at an initial time instant ($t$):

   - receiving (110), for a set of L successive time instants ( $\{t + k\}_{k\in[\![1;L]\!]}$ ), estimated wind directions ( $\{K'_{t+k}\}_{k\in[\![1;L]\!]}$ ) of wind (W) and estimated wind velocities ( $\{V'_{t+k}\}_{k\in[\![1;L]\!]}$ ), on the wind farm (10), each estimated wind direction being associated to a respective time instant;
   - for said initial time instant ($t$), determining (120), for each wind turbine (15i), a respective rotation command ( $u^i_t$ ) from the set of estimated wind directions ( $\{K'_{t+k}\}_{k\in[\![1;L]\!]}$ ) and the set of velocities of the wind ( $\{V'_{t+k}\}_{k\in[\![1;L]\!]}$ ) on the wind farm (10), by solving an optimization problem over an horizon L,

   the optimization problem aiming at maximizing an objective function ($f_{obj}$), comprising a first component (C1) and a second component (C2),

the first component (*C*1) being representative of power generated by the wind farm (10) for said set of successive time instants ( $\{t+k\}_{k\in[\![1;L]\!]}$ ),

the second component (*C*2) being representative of the fatigue of each wind turbine (15i) of the wind farm, surrogated over the set of successive time instants ( $\{t+k\}_{k\in[\![1;L]\!]}$ ),

said second component (*C*2) depending on the fatigue induced by mechanical moments of wind forces on each wind turbine (15i), at each time instant (*t*) of the set of successive time instants ( $\{t+k\}_{k\in[\![1;L]\!]}$ ), such fatigue being preferably a fatigue component due to a misalignment between an orientation of the wind turbine (15i) and the estimated wind directions ( $\{K'_{t+k}\}_{k\in[\![1;L]\!]}$ ),

- sending (130) the determined rotation command ( $u_t^i$ ) to each respective wind turbine (15i) for the rotation of each wind turbine (15i).

2. The control method according to claim 1, wherein during the receiving step (110) a grid constraint ( $\{P_{t+k}^{max}\}_{k\in[\![1;L]\!]}$ ) is received for each time instant (*t* + *k*) of the set of successive time instants ( $\{t+k\}_{k\in[\![1;L]\!]}$ ),

for each time instant (*t* + *k*), the grid constraint ( $\{P_{t+k}^{max}\}_{k\in[\![1;L]\!]}$ ) being a maximal power that a grid connected to the wind farm (10) is configured to handle,

the method (100) in addition comprising, a step (115, 125) of setting up a blade pitch angle ( $\zeta_{t+k}^i$ ) of each wind turbine (15i) for each time instant (*t* + *k*) of the set of successive time instants ( $\{t+k\}_{k\in[\![1;L]\!]}$ ) from the grid constraints ( $\{P_{t+k}^{max}\}_{k\in[\![1;L]\!]}$ ),

during the sending step (130), the blade pitch angle ( $\zeta_{t+1}^i$ ) at the next time instant (*t* + 1), being in addition sent to the respective wind turbine (15i).

3. The control method (100) according to claim 2, wherein during the step of setting up (115, 125), the blade pitch angle ( $\zeta_{t+k}^i$ ) of each wind turbine (15i) is determined by the following sub steps:

- initializing (115_1, 125_1), for each time instant (*t* + *k*) of the set of successive time instants ( $\{t+k\}_{k\in[\![1;L]\!]}$ ) and for each wind turbine (15i), the respective blade pitch angle ( $\zeta_{i+k}^i$ ) at a predetermined initial value,
- determining (115_2, 125_2), based on a simulator, the power generated by the wind farm (10) for said set of successive time instants ( $\{t+k\}_{k\in[\![1;L]\!]}$ ), based on the estimated wind directions ( $\{K'_{t+k}\}_{k\in[\![1;L]\!]}$ ), on the estimated wind velocities ( $\{V'_{t+k}\}_{k\in[\![1;L]\!]}$ ), with blade pitch angles ( $\zeta_{t+k}^i$ ) at the predetermined initial value,
- determining (115_3, 125_3), for each time instant (*t* + *k*) of the set of successive time instants ( $\{t+k\}_{k\in[\![1;L]\!]}$ ), a respective penalty coefficient ($v_{t+k}$) corresponding to a ratio between the determined power and the corresponding grid constraint ( $P_{t+k}^{max}$ ) of the respective time instant *(t + k)*,
- setting up (115_4, 125_4) the value of each blade pitch angle ( $\zeta_{t+k}^i$ ) based on the corresponding penalty coefficient ($v_{t+k}$), so that; for each instant ( $\{t+k\}_{k\in[\![1;L]\!]}$ ), the power generated by the wind farm (10) at the corresponding time instant (*t* + *k*) and considering the set up value of each blade pitch angle ( $\zeta_{t+k}^i$ ), is equal to the grid constraint ( $P_{t+k}^{max}$ ).

4. The control method (100) according to the preceding claim, comprising the step (115) of setting up each blade pitch angle ( $\zeta_{t+k}^i$ ) between the receiving step (110) and the determining step (120),

during the sub step (115_2) of determining the power generated by the wind farm, said power is determined considering that each wind turbine (15i) is facing the corresponding estimated wind direction ( $\{K'_{t+k}\}_{k\in[\![1;L]\!]}$ ) at each instant ($t + k$) of the set of successive time instants ( $\{t+k\}_{k\in[\![1;L]\!]}$ ),

during the determining step (120), the objective function ($f_{obj}$) depending the set-up blade pitch angles ( $\{\zeta^i_{t+k}\}_{k\in[\![1;L]\!]}$ ).

5. The control method (100) according to claim 3 or 4, wherein the method comprises the step (125) of setting up each blade pitch angle ( $\zeta^i_{t+k}$ ) between the determining step (120) and the sending step (130),

during the sub step (125_2) of determined the power generated by the wind farm (1), said power is determined considering that each wind turbine (15i) follows the respective determined rotation command ( $u^i_t$ ).

6. The control method (100) according to any of the preceding claims, wherein during the receiving step (110), a set of power weightings ( $\{E_{t+k}\}_{k\in[\![1;L]\!]}$ ) is received, the set of power weightings ( $\{E_{t+k}\}_{k\in[\![1;L]\!]}$ ) comprising a weighting for each time instant ($t + k$) of the set of successive time instants ( $\{t+k\}_{k\in[\![1;L]\!]}$ ),

during the determining step (120), the first component ($C1$) comprising for each time instant ($t + k$) of the set of successive time instants ( $\{t+k\}_{k\in[\![1;L]\!]}$ ), the power generated by the farm (10) weighted by the received power weighting ($E_{t+k}$) of the corresponding time instant ($t + k$).

7. The control method (100) according to any of the preceding claims, wherein during the receiving step (110), a deactivation constraint is received for each time instant ($t + k$) of the set of successive time instants ( $\{t+k\}_{k\in[\![1;L]\!]}$ ),

for each time instant ($t + k$) and for each wind turbine (15i), the deactivation constraint indicating if each the wind turbine (15i) produces power or not,
during the determining step (120), the first ($C1$) and the second ($C2$) components depending on the deactivation constraints.

8. The control method (100) according to any of the preceding claims, wherein the first component (C1) comprises, for each time instant ($t + k$) of the set of successive time instants ( $\{t+k\}_{k\in[\![1;L]\!]}$ ), the power generated by the wind farm (10) evaluated by a power simulator, and
wherein the second component (C2) comprises, for each time instant ($t + k$) of the set of successive time instants ( $\{t+k\}_{k\in[\![1;L]\!]}$ ), the fatigue of the wind turbines (15i) of the wind farm (10) evaluated by a fatigue simulator.

9. The control method (100) according to the preceding claim, wherein the determining step (120) comprises:

- initializing at predetermined values, an angle ( $\theta^i_{t+k}$ ) between an orientation of each wind turbine (15i) and the estimated wind direction ( $K'_{t+k}$ ), for each time instant ($t + k$) of the set of successive time instants ( $\{t+k\}_{k\in[\![1;L]\!]}$ ), said set of angles ( $\{\theta^i_{t+k}\}_{k\in[\![1;L]\!],i\in[\![0;N-1]\!]}$ ) being further denoted operating point (X),
the determining step (120) further comprising the following sub steps that are iterated several times until a predefined termination criterion is met:

- estimating a gradient ( $\overrightarrow{\nabla C1}$ ) of the first component (C1) at the operating point (X), as a function of said angles ( $\theta^i_{t+k}$ ), by performing several estimations of the first component (C1) with the power simulator, preferably according to a finite difference algorithm,
- estimating a gradient ( $\overrightarrow{\nabla C2}$ ) of the second component (C2) at the operating point (X), a function of said angle ( $\theta^i_{t+k}$ ), by performing several estimations of the second component (C2) with the fatigue simulator, preferably according to a finite difference algorithm,
- updating the operating point (X) based on the estimated gradients ( $\overrightarrow{\nabla C1}, \overrightarrow{\nabla C2}$ ),

the determining step (120) further comprising :

- determining the rotation command ( $u_t^i$ ) of each wind turbine (15i) from the last updated operating point (*X*).

10. The control method (100) according to any of the preceding claims, wherein during the receiving step (110), a maximum misalignment constraint ($\theta_{max}$) is received,
during the determining step (120) the optimization problem being solved over a feasible space wherein, at each time instant (*t* + *k*) of the set of successive time instants ( $\{t + k\}_{k \in [\![1;L]\!]}$ ), and for each wind turbine (15i), an angle ( $\theta_{t+k}^i$ ) between the wind turbine orientation and the estimated wind direction ( $\{K'_{t+k}\}_{k \in [\![1;L]\!]}$ ) is bounded by the maximum misalignment constraint ($\theta_{max}$).

11. The control method (100) according to any of the preceding claims, wherein during determining step (120), the objective function ($f_{obj}$) comprises a third component (*C3*) representative of the rotation of each wind turbine (15i) between two successive time instants (*t* + *k* - 1,*t* + *k*) of the set of successive time instants ( $\{t + k\}_{k \in [\![1;L]\!]}$ ), said third component (*C3*) penalizing the objective function ($f_{obj}$) as a function of a variation ( $\Delta\beta_{t+k}^i$ ) of the wind turbine orientation ( $\beta_{t+k}^i$ ) between two successive time instants (*t* + *k* - 1, *t* + *k*).

12. The control method according to any of the preceding claims, wherein the objective function comprises a discount factor ($\gamma^k$) making decrease the influence of the first (*C1*) and the second (*C2*) through the time instants (*t*) of the set of successive time instants ( $\{t + k\}_{k \in [\![1;L]\!]}$ ).

13. A computer program product comprising software instructions which, when being executed by a computer, implement a method according to any of the preceding claims.

14. An electronic control device for controlling a wind farm (10) comprising a plurality of wind turbines (15i), based on a plurality of estimated wind velocities ( $\{V'_{t+k}\}_{k \in [\![1;L]\!]}$ ) and a plurality of estimated wind directions ( $\{K'_{t+k}\}_{k \in [\![1;L]\!]}$ ) of the wind (*W*) on the wind farm (10),

each wind turbine (15i) being configured, upon receiving a rotation command ( $u_t^i$ )*,* to rotate, around an elongation axis (E) respective of the wind turbine (15i), according to said rotation command ( $u_t^i$ ),
the electronic control device (45) comprising:

- a receiving module configured to receive, for a set of L successive time instants ( $\{t + k\}_{k \in [\![1;L]\!]}$ ), estimated wind directions ( $\{K'_{t+k}\}_{k \in [\![1;L]\!]}$ ) of wind (*W*) and estimated wind velocities ( $\{K'_{t+k}\}_{k \in [\![1;L]\!]}$ ), on the wind farm (10), each estimated wind direction being associated to a respective time instant;
- a determining module configured to determine, for said initial time instant (*t*) and for each wind turbine (15i), a respective rotation command ( $u_t^i$ ) from the set of estimated wind directions ( $\{K'_{t+k}\}_{k \in [\![1;L]\!]}$ ) and the set of velocities of the wind ( $\{V'_{t+k}\}_{k \in [\![1;L]\!]}$ ) on the wind farm (10), by solving an optimization problem over an horizon *L*,

the optimization problem aiming at maximizing an objective function ($f_{obj}$), comprising a first component (*C1*) and a second component (*C2*),
the first component (*C1*) being representative of power generated by the wind farm (1) for said set of successive time instants ( $\{t + k\}_{k \in [\![1;L]\!]}$ ),
the second component (*C2*) being representative of the fatigue of each wind turbine (15i) of the wind farm, surrogated over the set of successive time instants ( $\{t + k\}_{k \in [\![1;L]\!]}$ ),
said second component (*C2*) depending on the fatigue induced by a moment of wind forces on each wind turbine

(15i), at each time instant ($t + k$) of the set of successive time instants ( ${\{t + k\}}_{k\in[\![1;L]\!]}$ ), such fatigue being preferably a fatigue component due to a misalignment between an orientation of the wind turbine (15i) and the estimated wind directions ( ${\{K'_{t+k}\}}_{k\in[\![1;L]\!]}$ ),

    - a sending module configured to send the determined rotation command ( $u_t^i$ ), to each respective wind turbine (15i) for the rotation of each wind turbine (15i).

FIG.1

$\zeta_t^i$

-41-

30

35

25

15i

-40-

E

R

FIG.2

R

15i

$\theta^i_t$

35

$\beta^i_t$

35

$K'_t$

W

E

**FIG.3**

FIG.4

125 — **Setting-up blade pitch angles**

> Initializing the blade pitch angles — 125_1

> Determining power generated by the wind farm — 125_2

> Determining penalty coefficients — 125_3

> Setting-up blade pitch angles — 125_4

130 — Sending rotation commands and pitch angles to the wind turbines

## FIG.5

**EUROPEAN SEARCH REPORT**

Europäisches Patentamt
European Patent Office
Office européen des brevets

| Application Number |
| --- |
| **EP 24 30 7342** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | ISHAAN SOOD ET AL: "Quasi-static closed-loop wind-farm control for combined power and fatigue optimization", ARXIV.ORG, CORNELL UNIVERSITY LIBRARY, 201 OLIN LIBRARY CORNELL UNIVERSITY ITHACA, NY 14853, 19 May 2023 (2023-05-19), XP091512628, | 1-5,7, 10,13,14 | INV. F03D7/02 F03D7/04 |
| Y | * abstract * * Sections 2.2, 2.4.2, 2.5, 3-6 * ----- | 6,8,9,12 | |
| X | YIN XIUXING ET AL: "Reliability aware multi-objective predictive control for wind farm based on machine learning and heuristic optimizations", ENERGY, ELSEVIER, AMSTERDAM, NL, vol. 202, 1 May 2020 (2020-05-01), XP086162807, ISSN: 0360-5442, DOI: 10.1016/J.ENERGY.2020.117739 [retrieved on 2020-05-01] * Sections 1.3, 2, 3, 4 * ----- | 1,8,10, 11,13,14 | |
| | | | **TECHNICAL FIELDS SEARCHED (IPC)** |
| Y | MEHDI VALI: "Adjoint-based model predictive control for optimal energy extraction in waked wind farms", CONTROL ENGINEERING PRACTICE, vol. 84, 1 March 2019 (2019-03-01), pages 48-62, XP093161937, ISSN: 0967-0661, DOI: 10.1016/j.conengprac.2018.11.005 * Section 3 * ----- | 6,8,9,12 | F03D |

The present search report has been drawn up for all claims

| Place of search | Date of completion of the search | Examiner |
| --- | --- | --- |
| The Hague | 11 June 2025 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)